Europäisches Patentamt

(19) European Patent Office

Office européen des brevets

(11) Numéro de publication: **0 162 986**
**B1**

(12) # FASCICULE DE BREVET EUROPEEN

(45) Date de publication du fascicule du brevet:
**24.05.89**

(21) Numéro de dépôt: **84401047.0**

㉒ Date de dépôt **18.05.84**

(51) Int. Cl.⁴: **B 60 R 21/02**

(54) Mécanisme antivol de véhicule par désacouplement du volant au moyen d'une pièce amovible.

(43) Date de publication de la demande:
**04.12.85 Bulletin 85/49**

(45) Mention de la délivrance du brevet:
**24.05.89 Bulletin 89/21**

⑧④ Etats contractants désignés·
**AT BE CH DE FR GB IT LI LU NL SE**

⑤⑥ Documents cités
**EP-A- 0 008 308**
**US-A- 1 809 765**

(73) Titulaire: **Malvy, Michel, 242 Avenue de Stalingrad,**
**F-94500 Champigny (FR)**
Titulaire Jalabert. Pierre, 27 Route des Pyrénées,
F-11190 Couiza (FR)

(72) Inventeur: **Malvy, Michel, 242 Avenue de Stalingrad,**
**F-94500 Champigny (FR)**
Inventeur: **Jalabert, Pierre, 27 Route des Pyrénées,**
**F-11190 Couiza (FR)**

㉔ Mandataire Gorree. Jean-Michel et al. Cabinet
**Plasseraud 84, rue d'Amsterdam, F-75009 Paris (FR)**

# Description

L'invention concerne un dispositif de solidarisation ou de désolidarisation rapide, à des fins d'antivol, du volant et de la colonne de direction d'un véhicule automobile. Ce dispositif se monte sur tous les véhicules dont la colonne de direction est équipée d'un moyeu qui sert de support.

On connaît les volants à caractère sportif ou de luxe, qui remplacent les volants d'origine montés sur les véhicules. Après retrait du volant d'origine, ces volants de sport sont fixés par l'intermédiaire d'un moyeu rapporté sur la colonne de direction. Le moyeu sert d'adaptateur pour le volant en subissant la diversité des modèles de colonne de direction.

La demande de brevet EP-A-0 008 308 décrit un dispositif du genre précité dans lequel la colonne de direction est constituée en deux parties, l'une de ces parties étant agencée pour pouvoir être enlevée ou mise en place de manière simple de façon que l'accouplement entre la colonne de direction et le volant puisse être interrompu ou respectivement établi. Toutefois, ce dispositif connu nécessite une adaptation de la colonne de direction du véhicule, ce qui exige un travail particulier à chaque type de véhicule. Ce travail est long et coûteux et, en tout état de cause, il ne se prête pas à une adaptation rapide et fiable, pouvant être éventuellement effectué par le propriétaire lui-même du véhicule.

La présente invention a pour but de créer un mécanisme antivol de véhicule par désaccouplement du volant au moyeu par retrait d'une pièce, clé de l'antivol. Ce mécanisme ne doit pas gêner les dispositifs électriques existants en rapport avec la sécurité de la signalisation du véhicule.

A ces fins, le dispositif conforme à l'invention se caractérise essentiellement en ce qu'il comporte en combinaison:

– une embase ou couronne chapée solidaire de la colonne de direction,

– une platine ou couronne à double chape solidaire du volant,

– une pièce de liaison intermédiaire intercalée de façon amovible entre l'embase et la platine,

– un premier ensemble de doigts d'accouplement ou piétages pour accoupler en rotation l'embase et la pièce de liaison,

– un second ensemble de doigts d'accouplement ou piétages pour accoupler en rotation la pièce de liaison et la platine, et

– des moyens d'assemblage pour assembler axialement l'embase, la pièce de liaison et la platine, ce grâce à quoi la pièce de liaison peut facilement être mise en place entre l'embase et la platine (le volant étant alors accouplé en rotation à la colonne de direction) ou enlevée (le volant étant alors désaccouplé en rotation d'avec la colonne de direction).

Le système est conçu de façon qu'une pièce centrale indispensable à l'accouplement de l'ensemble soit facilement retirable. Cette pièce individualisée pour chaque système constitue une clé pour l'antivol.

Dans un mode de réalisation préféré, les doigts du premier ensemble sont portés par l'embase et la pièce de liaison comporte un premier ensemble de logements ou trous agencés pour recevoir lesdits doigts. Avantageusement, en outre, les doigts du second ensemble sont portés par la pièce de liaison et la platine comporte un second ensemble de logements ou trous agencés pour recevoir lesdits doigts.

De façon souhaitable dans ce cas, les doigts du premier ensemble sont disposés selon une configuration particulière à chaque dispositif, ce grâce à quoi est créé un détrompage n'autorisant le montage d'une pièce de liaison donnée que sur l'embase qui lui est spécifiquement associée, sans que cette configuration soit visible une fois le volant enlevé.

Afin que le dispositif demeure invisible lorsque le volant est en place sur la colonne de direction, la pièce de liaison intermédiaire possède une dimension transversale inférieure à la dimension transversale de l'embase et de la platine, et les faces mutuellement en regard de l'embase et de la platine définissent ensemble un logement dans lequel est reçue la pièce de liaison.

Avantageusement, l'embase comprend une plaque de support portant le premier ensemble de doigts qui est solidarisée à un moyeu possédant des moyens de fixation sur l'extrémité libre de la colonne de direction, des moyens spécifiques étant prévus pour des véhicules différents, ce qui permet d'équiper n'importe quel type de véhicule avec un dispositif standard et une seule pièce adaptée à chaque configuration de volant. La tenue des pièces en stock s'en trouve grandement simplifiée et rendue plus économique.

L'invention est exposée ci-après plus en détail à l'aide de dessins représentant seulement un mode d'exécution.

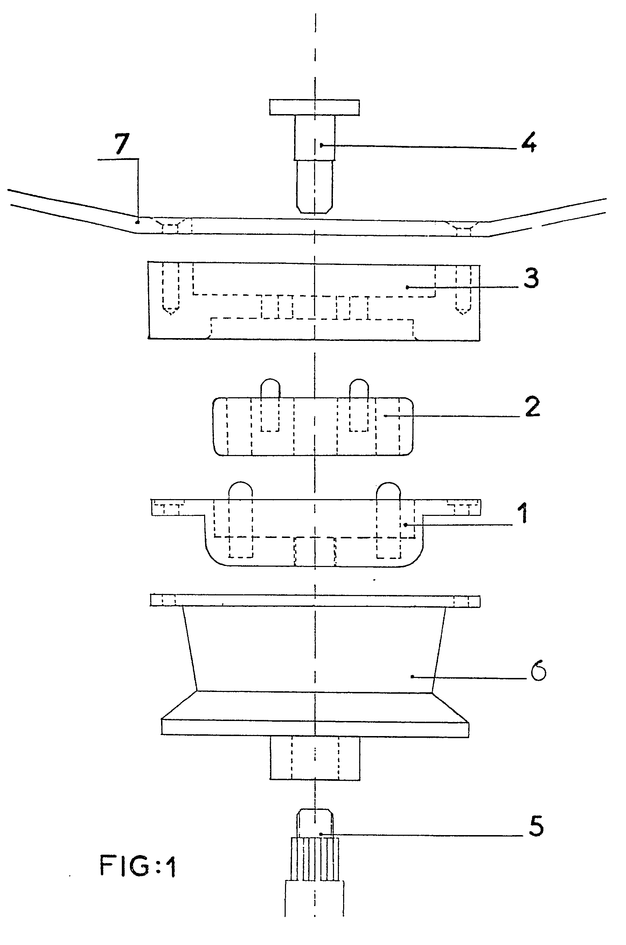

La figure 1 représente le dispositif antivol en vue éclatée intégré dans l'ensemble volant moyeu.

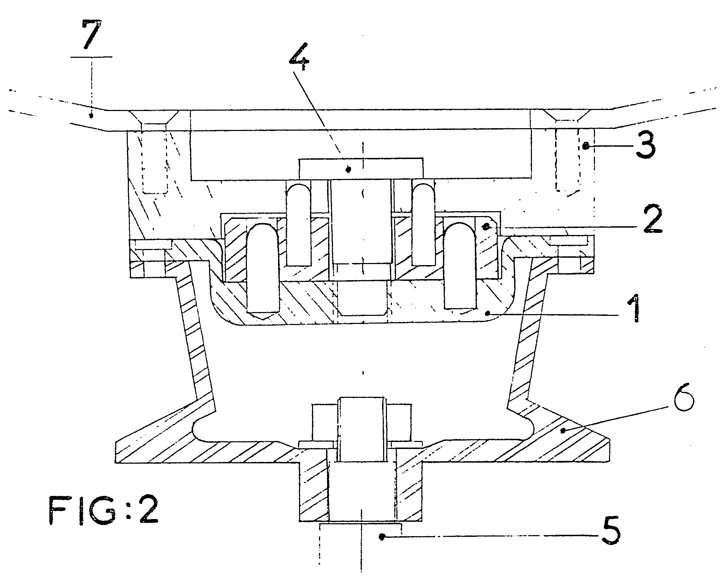

La figure 2 est une coupe du dispositif antivol en position assemblée intégré dans l'ensemble volant moyeu.

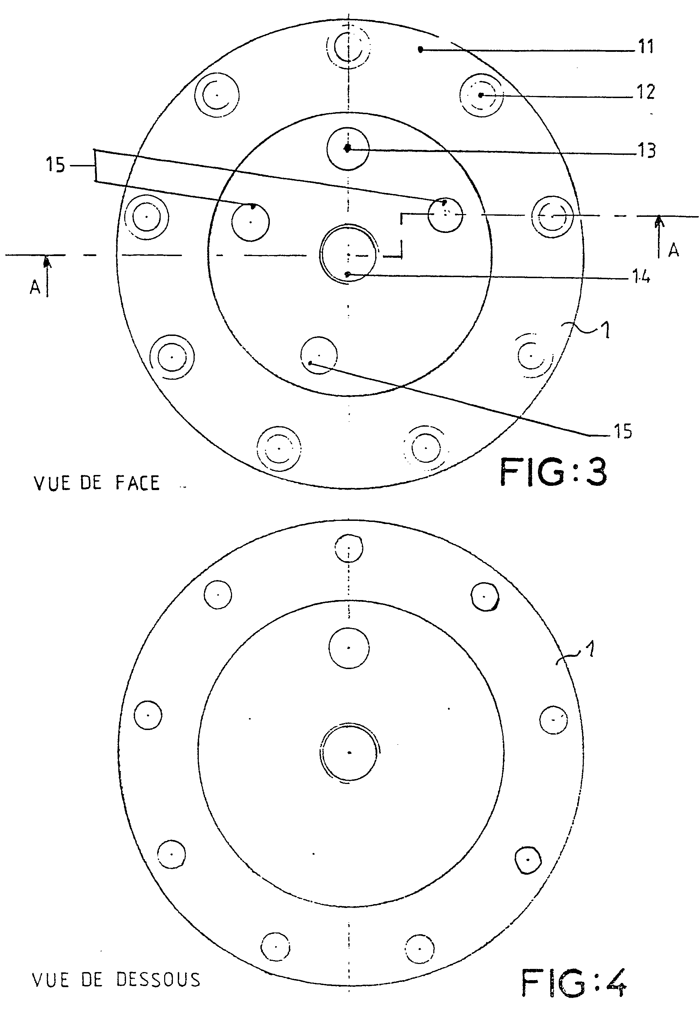

La figure 3 est une vue de face de la pièce 1.

La figure 4 est une vue de dessous de la pièce 1.

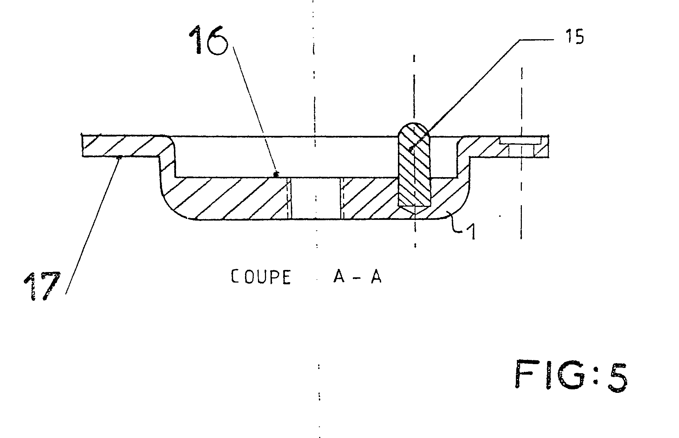

La figure 5 est une coupe suivant A–A de la figure 3.

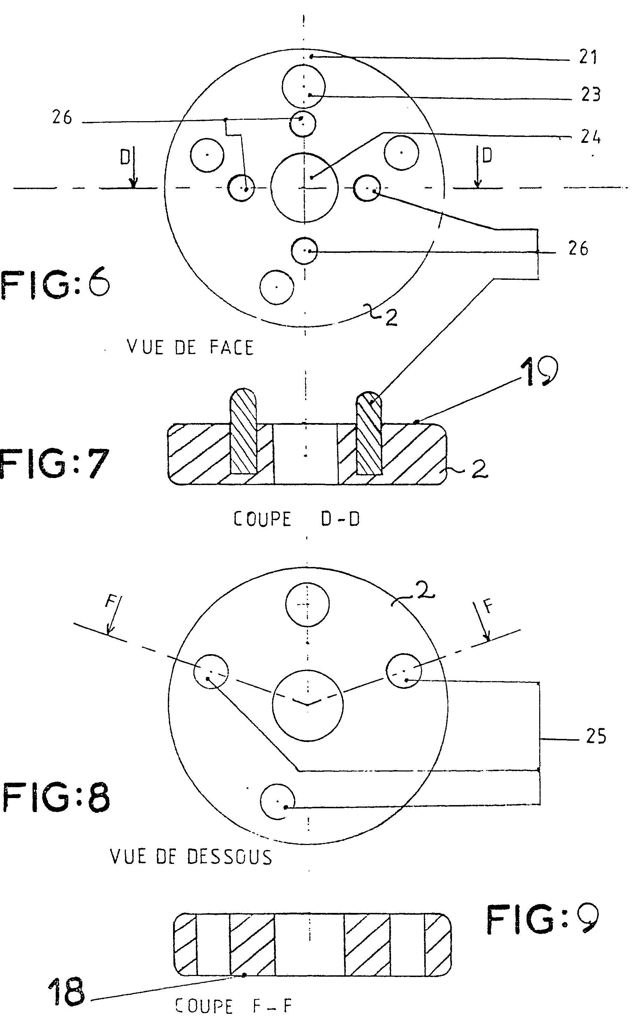

La figure 6 est une vue de face de la pièce 2.

La figure 7 est une coupe D–D de la figure 6.

La figure 8 est une vue de dessous de la pièce 2.

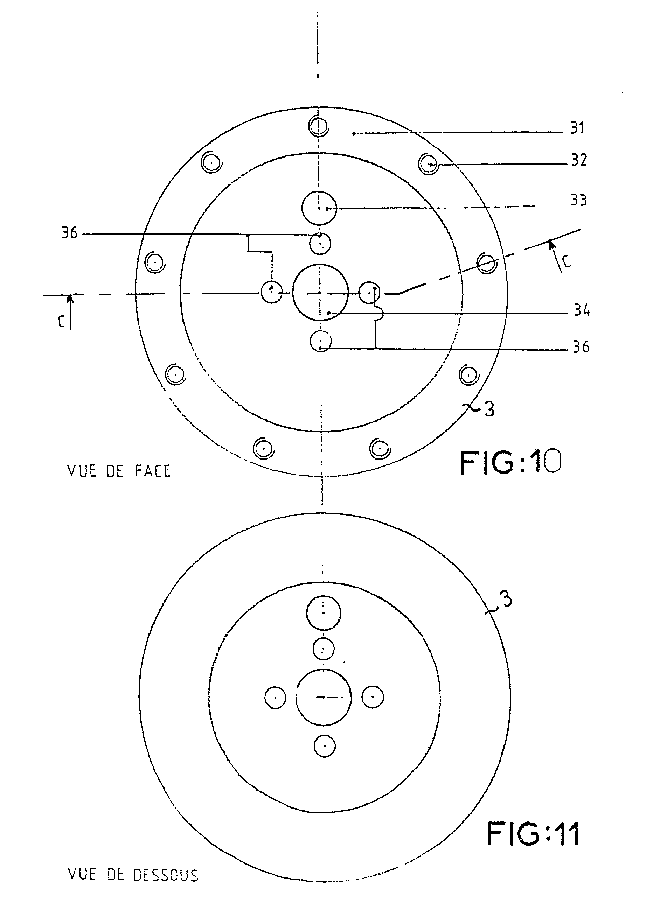

La figure 9 est une coupe F.F. de la figure 8.

La figure 10 est une vue de face de la pièce 3.

La figure 11 est une vue de dessous de la pièce 3.

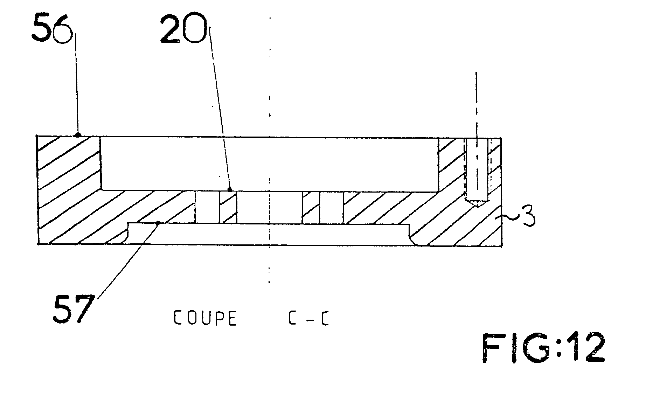

La figure 12 est une coupe C.C. de la figure 10.

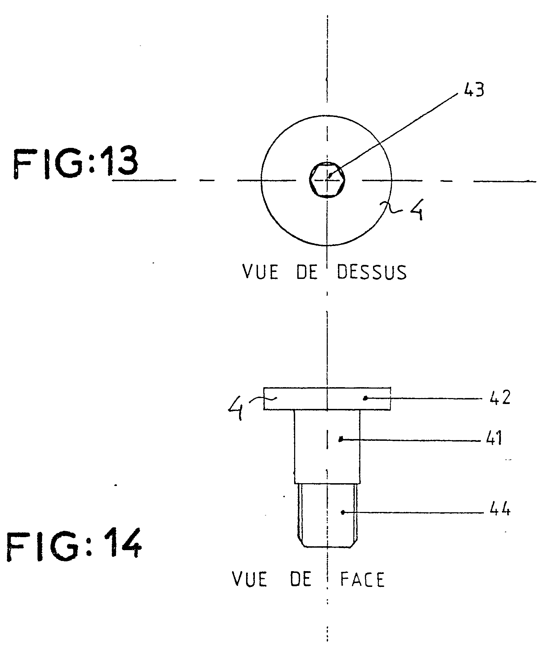

La figure 13 est une vue de dessus de la pièce 4.

La figure 14 est une vue de face de la pièce 4.

La pièce 1 est une couronne chapée. Cette pièce est constitué d'un corps 11 et de plusieurs trous de fixation 12 comportant un lamage chacun servant à fixer la pièce 1 sur le 6 par l'intermédiaire de rivets aveugles ou de vis à têtes autocassantes. Le moyeu 6 est fixé sur la colonne de direction 5. Les têtes des rivets ou des vis se logent dans le lamage prévu à cet effet dans les trous 12. Un trou commun 13 aux trois pièces 1, 2, 3, est destiné à faire passer les fils électriques alimentant le contacteur de l'avertisseur du véhicule. Un taraudage central 14 permet d'accueillir la pièce 4. Les trois piétages codifiés 15 implantés sur la surface 16 assurent l'accouplement inférieur de la pièce 2 sur la face 18 et génèrent l'inviolabilité du système grâce à un positionnement unique à chaque dispositif.

La pièce 2 est une couronne. Cette pièce est constituée d'un corps 21, du trou commun 23 aux trois pièces 1, 2, 3, destiné à faire passer les fils électriques alimentant le contacteur de l'avertisseur du véhicule. Le perçage central 24 permet le passage de la pièce 4, les piétages 26 implantés sur la face 19 sont équidistants et permettent l'accouplement avec la face 57 de la pièce 3. Les trous codifiés 25 correspondent et permettent l'accouplement de la pièce 1 par la face 18 de la pièce 2.

La pièce 3 est une couronne à double chape. Cette pièce est constituée d'un corps 31 de trous taraudés 32 servant à la fixation du volant 7 sur la face 56; du trou commun 33 aux pièces 1, 2, 3. Le perçage central 34 permet le passage de la pièce 4. Les trous 36 correspondent aux piétages 26 de la pièce 2 et s'accouplent par les faces 57 de la pièce 3 et 19 de la pièce 2.

La pièce 4 est une pièce de serrage. Cette pièce est constituée d'un corps 41 d'une tête 42 et d'un trou hexagonal 43 et d'une partie filetée 44. La pièce 4 traverse respectivement la pièce 3 puis la pièce 2 pour se fixer sur la pièce 1 et maintenir cet ensemble. La tête 42 repose sur la face 20 de la pièce 3. La pièce 4 est réalisée dans un alliage ex: le laiton, plus tendre et gras que les pièces 1, 2, 3, pour assurer un meilleur serrage par friction moléculaire.

## Revendications

1. Dispositif de solidarisation ou de désolidarisation rapide, à des fins d'antivol, du volant et de la colonne de direction d'un véhicule automobile, caractérisé en ce qu'il comporte, en combinaison:
   - une embase ou couronne chapée (1) solidaire de la colonne de direction (5),
   - une platine ou couronne à double chape (3) solidaire du volant (7),
   - une pièce de liaison intermédiaire ou couronne (2) intercalée de façon amovible entre l'embase (1) et la platine (3),
   - un premier ensemble de doigts d'accouplement ou piétages (15) pour accoupler en rotation l'embase (1) et la pièce de liaison (2),
   - un second ensemble de doigts d'accouplement ou piétages (26) pour accoupler en rotation la pièce de liaison (2) et la platine (3), et
   - des moyens d'assemblage (4) pour assembler axialement l'embase (1), la pièce de liaison (2) et la platine (3), ce grâce à quoi la pièce de liaison peut facilement être mise en place entre l'embase et la platine (le volant étant alors accouplé en rotation à la colonne de direction) ou enlevée (le volant étant alors désaccouplé en rotation d'avec la colonne de direction).

2. Dispositif selon la revendication 1, caractérisé en ce que les doigts (15) du premier ensemble sont portés par l'embase (1) et en ce que la pièce de liaison (2) comporte un premier ensemble de logements ou trous (25) agencés pour recevoir lesdits doigts (15).

3. Dispositif selon la revendication 1 ou 2, caractérisé en ce que les doigts (26) du second ensemble sont portés par la pièce de liaison (2) et en ce que la platine (3) comporte un second ensemble de logements ou trous (36) agencés pour recevoir lesdits doigts (26).

4. Dispositif selon les revendications 2 ou 3, caractérisé en ce que les doigts (15) du premier ensemble sont disposés selon une configuration particulière à chaque dispositif, ce grâce à quoi est créé un détrompage n'autorisant le montage d'une pièce de liaison donnée que sur l'embase qui lui est spécifiquement associée.

5. Dispositif selon l'une quelconque des revendications 1 à 4, caractérisé en ce que la pièce de liaison intermédiaire (2) possède une dimension transversale inférieure à la dimension transversale de l'embase (1) et de la platine (3), et en ce que les faces mutuellement en regard de l'embase (1) et de la platine (3) définissent ensemble un logement dans lequel est reçue la pièce de liaison (2).

6. Dispositif selon l'une quelconque des revendications 1 à 5, caractérisé en ce que l'embase (1) comprend une plaque de support portant le premier ensemble de doigts (15) qui est solidarisée à un moyeu (6) possédant des moyens de fixation sur l'extrémité libre de la colonne de direction (5), des moyens spécifiques étant prévus pour des véhicules différents.

## Claims

1. A device for rapidly interlocking or disengaging, for purposes of anti-thelf, a steering wheel and a steering column of a motor vehicle, characterized in that it comprises in combination:
   - a base or recessed rim (1) secured to the steering column (5),
   - a plate or twice-recessed rim (3) secured to the steering wheel (7),
   - an intermediate connecting piece or rim (2) removably interposed between the base (1) and the plate (3),
   - a first set of coupling fingers or pins (15) for rotatably coupling the base (1) and the connecting piece (2),
   - a second set of coupling fingers or pins (26) for rotatably coupling the connecting piece (2) and the plate (3), and
   - assembly means (4) for axially assembling the base (1), the connecting piece (2) and the plate (3), whereby the connecting piece can easily be disposed between the base and the plate (the steering wheel being thus rotatably coupled to the steering column) or removed (the steering wheel being thus rotatably uncoupled to the steering column).

2. Device according to claim 1, characterized in that the fingers (15) of the first set are supported by the base (1), and that the connecting piece (2) comprises a first set of housings or holes (25) adapted for receiving said fingers (15).

3. Device according to claim 1 or 2, characterized in that the fingers (26) of the second set are supported by the connecting piece (2), and that the plate (3) comprises a second set of housings or holes (36) adapted for receiving said fingers (26).

4. Device according to claim 2 or 3, characterized in that the fingers (15) of the first set are arranged according to one configuration which is particular for each device, whereby a foolproof is obtained which allows that a given connecting piece can be mounted only on the base which is specifically associated thereto.

5. Device according to anyone of claims 1 to 4, characterized in that the intermediate connecting piece (2) has a transverse size smaller than the transverse size of the base (1) and the plate (3), and that the mutually opposite faces of the base (1) and the plate (3) define together a housing in which the connecting piece (2) is received.

6. Device according to anyone of claims 1 to 5, characterized in that the base (1) comprises a support plate supporting the first set of fingers (15) which is secured to a hub (6) having securing means on the free end of the steering column (5), particular means being provided for different vehicles.

## Patentansprüche

1. Vorrichtung zur schnellen Verbindung oder Trennung eines Lenkrades und einer Lenksäule eines Kraftfahrzeuges zur Diebstahlsicherung, gekennzeichnet durch die Kombination folgender Merkmale:

– ein mit der Lenksäule (5) verbundener Ansatz oder Kranz mit Haube (1),

– eine mit dem Lenkrad (7) verbundene Platte oder Kranz mit doppelter Aufnahme (3),

– ein zwischengesetztes Verbindungsstück oder ein Kranz (2), das oder der unbeweglich zwischen den Ansatz (1) und die Platte (3) zwischengeschaltet ist,

– eine erste Kupplungszapfenanordnung (15) zum Ankuppeln des Ansatz (1) und des Verbindungsstückes (2) in Drehbewegung,

– eine zweite Kupplungszapfenanordnung (26) zum Ankuppeln des Verbindungsstückes (2) und der Platte (3) in Drehbewegung, und

– Verbindungseinrichtungen (4) zur axialen Verbindung des Ansatzes (1), des Verbindungsstückes (2) und der Platte (3), wodurch das Verbindungsstück auf einfache Weise entsprechend zwischen den Ansatz und die Platte einsetzbar (wobei das Lenkrad dann drehsteif mit der Lenksäule gekuppelt ist) oder herausnehmbar ist (wobei das Lenkrad dann nicht drehsteif mit der Lenksäule verbunden ist).

2. Vorrichtung nach Anspruch 1, dadurch gekennzeichnet, daß die Zapfen (15) der ersten Anordnung vom Ansatz (1) getragen sind, und daß das Verbindungsstück (2) eine erste Anordnung von Lagerungen oder Löchern (25) zur Aufnahme der Zapfen (15) aufweist.

3. Vorrichtung nach Anspruch 1 oder 2, dadurch gekennzeichnet, daß die Zapfen (26) der zweiten Anordnung vom Verbindungsstück (2) getragen sind, und daß die Platte (3) eine zweite Anordnung von Lagerungen oder Löchern (36) zur Aufnahme der Zapfen (26) aufweist.

4. Vorrichtung nach Anspruch 2 oder 3, dadurch gekennzeichnet, daß die Zapfen (15) der ersten Anordnung nach einer besonderen Gestaltung an jeder Vorrichtung angeordnet sind, wodurch eine Irrtumsfreiheit hervorrufbar ist, welche die Montage eines gegebenen Verbindungsstückes nur auf einem speziell verbundenen Ansatz ermöglicht.

5. Vorrichtung nach Anspruch 1 oder einem der folgenden, dadurch gekennzeichnet, daß das zwischengesetzte Verbindungsstück (2) einen geringeren Querschnitt als der Querschnitt des Ansatzes (1) und der Platte (3) aufweist, und daß die sich gegenüberliegenden Flächen des Ansatzes (1) und der Platte (3) gemeinsam eine Lagerung für das Verbindungsstück (2) bilden.

6. Vorrichtung nach Anspruch 1 oder einem der folgenden, dadurch gekennzeichnet, daß der Ansatz (1) eine die erste Zapfenanordnung (15) tragende Stützplatte aufweist, welche mit einer Radnabe (6) verbunden ist, die Befestigungseinrichtungen zur Befestigung am freien Ende der Lenksäule (5) aufweist, wobei diese Einrichtungen für unterschiedliche Fahrzeuge vorgesehen sind.

7

4

3

2

1

6

5

FIG:1

FIG:2

15 ———

11

12

13

14

1

15

VUE DE FACE

A

A

**FIG:3**

VUE DE DESSOUS

1

**FIG:4**

16

15

17

COUPE A - A

1

FIG:5

EP 0 162 986 B1

FIG:6

VUE DE FACE

21
23
26
24
26

FIG:7

COUPE D-D

19
2

FIG:8

VUE DE DESSOUS

2
25

FIG:9

18

COUPE F-F

31

32

33

36

C

34

36

~3

VUE DE FACE

FIG:10

~3

FIG:11

VUE DE DESSOUS

56    20

57    COUPE    C - C

FIG:12

~3

FIG:13

43

4

VUE DE DESSUS

FIG:14

4

42

41

44

VUE DE FACE